# EUROPEAN PATENT SPECIFICATION

(11) **EP 1 265 746 B1**
(45) Date of publication and mention of the grant of the patent: **22.10.2003**
(21) Application number: 01906113.4
(22) Date of filing: 07.02.2001
(51) Int. Cl.: B32B 27/06, B32B 3/04, F16L 59/06

(54) **EVACUATED JACKET FOR THERMAL INSULATION AND PROCESS FOR MANUFACTURING THE SAME**
EVAKUIERTER MANTEL ZUR WÄRMEDÄMMUNG UND VERFAHREN ZU DESSEN HERSTELLUNG
ENVELOPPE SOUS VIDE D'ISOLATION THERMIQUE ET PROCEDE DE FABRICATION

(30) Priority: 18.02.2000 IT MI000287
(43) Date of publication of application: 18.12.2002
(73) Proprietor: SAES GETTERS S.p.A., 20020 Lainate (Milano) (IT)
(72) Inventor: MANINI, Paolo, I-20010 Arluno (IT); FERRARIO, Bruno, I-20027 Rescaldina (IT); RIZZI, Enea, I-20161 Milano (IT); PALLADINO, Massimo, I-20020 Lainate (IT); DI GREGORIO, Pierattilio, I-67039 Sulmona (IT)
(74) Representative: Adorno, Silvano
(86) International application number: IT0100053
(87) International publication number: WO01060598

(56) References cited:
- EP-A- 0 771 995
- DE-U- 29 823 140
- GB-A- 2 289 015
- US-A- 4 564 107
- PATENT ABSTRACTS OF JAPAN vol. 1996, no. 02, 29 February 1996 (1996-02-29) & JP 07 269781 A (TOSHIBA CORP;OTHERS: 01), 20 October 1995 (1995-10-20)
- PATENT ABSTRACTS OF JAPAN vol. 1995, no. 04, 31 May 1995 (1995-05-31) & JP 07 012292 A (MATSUSHITA REFRIG CO LTD), 17 January 1995 (1995-01-17)

## Description

The present invention relates to evacuated jackets for thermal insulation, and in particular it relates to an evacuated jacket comprising an improved envelope, as well as to a process for manufacturing the same.

Evacuated jackets are being increasingly used in a number of fields wherein thermal insulation at temperatures lower than about 100°C is required. As examples of application of these jackets, mention can be made of the walls of domestic and industrial refrigerators, of the beverage dispenser machines or of the containers for isotherm transportation, for example of drugs or cold or frozen foods. Further, applications of these jackets in the building field or in the car industry are being studied.

As it is known, an evacuated jacket is formed of an envelope inside which a filling material is provided. The envelope has the purpose of preventing (or reducing as much as possible) the entrance of atmospheric gases into the jacket, so as to maintain a vacuum level compatible with the degree of thermal insulation required by the application. The filling material has mainly the function of spacing apart the two opposite sides of the envelope when the jacket is evacuated, and must have a porous or discontinuous internal structure, so that its porosities or interstices can be evacuated in order to perform the thermally insulating function. This material can be inorganic, such as for example silica powder, glass fibers, aerogels, diatomaceous earths, etc.; or organic, such as rigid polyurethane or polystyrene foams, both in the form of boards and of powders.

The envelope is made with so-called "barrier" sheets, which are characterized by their gas permeability being as low as possible and can be made of a single component but more frequently are multi-layers of different components. In the case of the multi-layers the "barrier" effect is conferred by one of the component layers, or barrier layer, which can be formed of polymeric materials, such as ethylene-vinyl alcohol copolymers (known in the literature with the abbreviation EVOH); of polymeric layers on which a thin layer (generally less than 0,5 µm) of aluminum or of an inorganic oxide is deposited; or of a metal sheet, mainly aluminum, having a thickness generally comprised between 4 and 10 µm. The multi-layer barrier sheet comprises at least one support layer of a polymeric material having good mechanical features, particularly plasticity; said layer can be formed for example of polyacrylonitrile (PAN) or a polyolefine. On the opposite side with respect to said support layer, the barrier layer is covered with at least one protection layer, also polymeric. The polymeric protection layers are commonly made of polyesters (for example polyethylene terephtalate, normally abbreviated in PET) or polyamides (for example, Nylon®). Multi-layers comprising five, six or even more superimposed layers are also common.

The envelope is generally formed of two barrier sheets having rectangular shape, reciprocally joined along the margins thereof by means of perimetrical weldings. The so joined margins of the barrier sheets form four flanges arranged at the sides of the resulting envelope. However, the main drawback of the envelopes of this kind consists exactly in the presence of these flanges, which are very fragile and their possible fracturing can easily propagate beyond the perimetrical weldings, causing the permeation of atmospheric gases into the jacket and thus compromising the thermal insulating features thereof.

In other technical fields, for example in food packaging, a general process for the preparation of an envelope starting with a single rectangular sheet of plastic material is known, which enables the reduction of the number of the flanges from four to two to be obtained. According to this process, whose steps are briefly illustrated in figure 5a-5c, sheet S is rolled up on itself until two opposite margins M, M', which belong to the same side of the sheet, meet together (fig. 5a). Said margins are reciprocally joined by a longitudinal welding, thus forming a welding flange F which is then folded over the external surface of the sheet (fig. 5b). Thus, an envelope is formed having two opened ends whose sealing, transversely to flange F, is carried out by inserting the edges thereof between welding bars. In the two areas wherein these weldings intersect the flange, the envelope takes on the conformation shown in figure 5c (which has an enlarged scale with respect to figures 5a and 5b).

However, this process cannot be applied to evacuated jackets. As a matter of fact, in the folded position of figure 5c, flange F causes a thickness which reduces the passage of heat from the welding bars to the underlying polymeric layers of the barrier sheet and therefore prevents a perfect reciprocal sealing. Further, because of its stiffness, along the folding lines the barrier sheet hardly forms sharp comers and can be only curved; a slot (indicated with L in figure 5c) remains in the intersection area between flange F and the seals transversal thereto, which enables the passage of atmospheric gases towards the inside of the jacket, although in a reduced quantity. The smallest gas infiltrations resulting from this imperfections, which would be acceptable in other technical fields, are not acceptable in the case of the envelopes for evacuated jackets.

Object of the present invention is therefore providing an evacuated jacket free from said drawbacks and a process for manufacturing the same. Said object is achieved by means of an evacuated jacket whose main features are specified in the first claim and other features are specified in the subsequent claims. The features of the process are specified in claim 7.

A first advantage of the evacuated jacket according to the present invention consists in that its envelope has a very good gas tightness also at the end seals, although it is made starting from a single barrier sheet. As a matter of fact, thanks to said support layer and said protecting layer being formed of mutually heat-sealable materials having a similar melting temperature, it is possible that the opposite layers which are joined together by means of said longitudinal welding belong to opposite sides of the sheet, so that the resulting envelope is flat in the welding area and does not comprise a longitudinal flange.

Consequently, when the edge of one end of the envelope is inserted between welding bars for the sealing thereof, the heat of said bars causes the melting of said support and protection layers, which become soft, thus allowing the welding bars to near each other so as to eliminate all the slots between the portions of said edges.

An advantage of the process for manufacturing the evacuated jacket according to the present invention consists in that, simultaneously to the sealing of the envelope ends, the thickness of the transversal flanges is made uniform by the welding bars. As a matter of fact, while said bars are nearing each other, the exceeding material is discharged from the sides because of the pressure of said bars and can be removed.

According to a particular aspect of the invention, said support layer and said protection layer are made of the same material.

Further advantages and features of the evacuated jacket according to the present invention will appear to those skilled in the art from the following detailed description of one embodiment thereof with reference to the accompanying drawings, wherein:
- figure 1 shows an enlarged cross-sectional view of a barrier sheet that can be used for manufacturing an evacuated jacket according to said embodiment;
- figure 2 shows a step of the manufacturing of the evacuated jacket according to said embodiment;
- figure 3 shows a complete evacuated jacket according to said embodiment;
- figure 4 shows an enlarged cross-sectional view of a lateral flange of the jacket of figure 3 taken along line IV-IV of the same figure; and
- figures 5a, 5b and 5c, the last being an enlarged partial sectional view, schematically show three steps of the manufacturing of a known jacket.

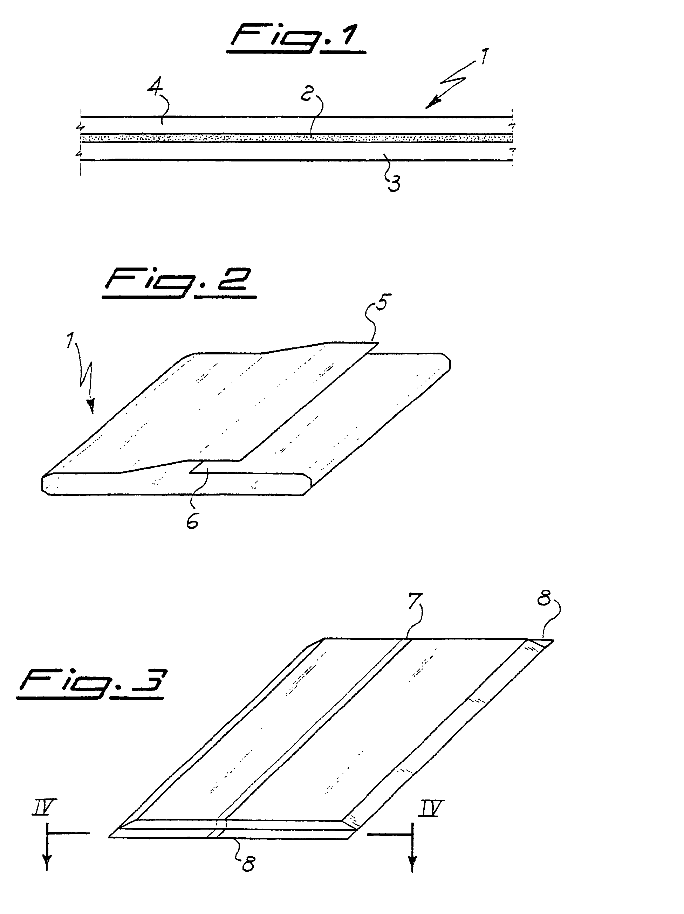

With reference to figure 1, there is shown that barrier sheet 1 which forms the envelope of the evacuated jacket according to the present embodiment of the invention is a multi-layer comprising a central layer 2 provided with barrier properties towards atmospheric gases and consisting for example of a metal sheet, e.g. aluminum, having a thickness between 4 and 10 µm.

Further, said multi-layer comprises a lower layer 3 and an upper layer 4 suitable for providing support and protection for the central layer 2, and to enable the heat-sealing of the sheet. In addition to the good mechanical features, particularly plasticity, it is required that the materials which form said layers are mutually heat-sealable. Said materials can be selected in the group consisting of polyacrylonitrile (PAN), polyolefines, such as polyethylene, and polyvinylchloride, as well as mixtures and copolymers thereof. The lower layer 3 and the upper layer 4 suitably have a thickness between 20 and 100 µm, preferably of about 50 µm.

According to a particular embodiment of the invention, the lower layer 3 and the upper layer 4 are made of the same material. Particularly suitable for this purpose is high density polyethylene (known as HDPE).

With reference to figure 2, there is shown that the envelope of the evacuated jacket according to the present invention is made rolling up said barrier sheet 1 so as to superimpose two opposite margins 5 and 6 thereof. The superimposition is carried out so as to contact the lower layer 3 at margin 5 with the upper layer 4 at the other margin 6.

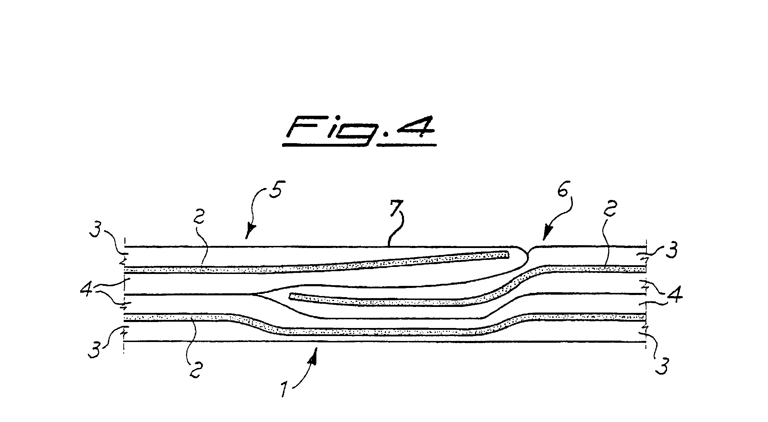

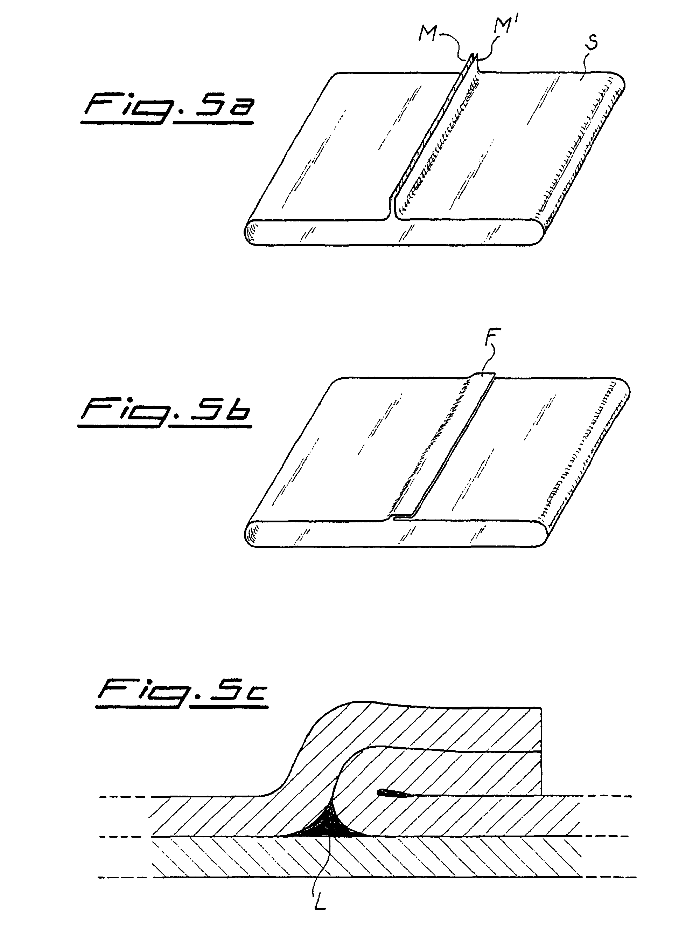

Now, with reference to figure 3, there is shown that, by virtue of the mutual heat-sealability of said lower layer 3 and upper layer 4, the longitudinal welding of the two margins 5 and 6 has been carried out without having to fold the barrier sheet, therefore the obtained envelope does not have a longitudinal flange and is flat in the linear zone 7 of the longitudinal welding.

Subsequently, the open ends along the edges orthogonal to margins 5 and 6 are sealed, by inserting said edges between welding bars. Once they have been sealed on themselves, said edges form two lateral flanges 8.

Before the last sealing a porous or discontinuous, organic or inorganic filling material of any known kind, and optionally a getter material or device are inserted inside the envelope. A number of getter materials or devices, suitable for chemically sorbing moisture or other atmospheric gases, are known in the field and therefore do not need a detailed description.

Figure 4 shows an enlarged partial view in cross-section of one of said lateral flanges 8. In particular, it shows the portion of said flange which comprises the linear zone 7 of the longitudinal welding. With reference to said drawing, there is shown that the thickness of each lateral flange 8 is uniform all over its length, in spite of the threefold superimposition of the barrier sheet 1, in the linear zone 7 of the longitudinal welding. This can be explained considering that in said linear zone 7 the lower layer 3 and upper layer 4 of the barrier sheet have become thinner. As a matter of fact, during the step of sealing the envelope ends, the heat of the welding bars causes said layers to be melted and to become soft, so that some of the polymeric material of which they are formed is discharged from the sides because of the pressure of said bars and can be removed. As it appears from the drawing, the edges of the envelope ends are perfectly sealed on themselves and no slot is present. On the contrary, by the process according to the state of the art which was previously described with reference to figure 5c, the seals in this area are not perfect, so that the entrance of air inside the jacket is allowed which compromises the thermal insulation properties thereof.

## Claims

1. An evacuated jacket for thermal insulation, comprising a discontinuous or porous, organic or inorganic filling material arranged inside an envelope made with at least one multi-layer barrier sheet (1) of substantially rectangular shape, which comprises at least one polymeric or inorganic central layer (2) having barrier properties towards atmospheric gases, an upper layer (4) and a lower layer (3), **characterized in that** said upper layer (4) and said lower layer (3) of the barrier sheet (1) are formed of mutually heat-sealable polymeric materials.

2. An evacuated jacket according to the preceding claim, **characterized in that** both the polymeric material which forms said upper layer (4) and the polymeric material which forms said lower layer (3) of the barrier sheet (1) are selected in the group consisting of: polyolefines, poliacrylonitrile, polyvinylchloride and mixtures or copolymers thereof.

3. An evacuated jacket according to the preceding claim, **characterized in that** both the upper layer (4) and the lower layer (3) of the barrier sheet are made of high density polyethylene or a copolymer thereof.

4. An evacuated jacket according to any of the preceding claims, **characterized in that** said upper layer (4) and said lower layer (3) of the barrier sheet (1) have a thickness between 20 and 100 µm.

5. An evacuated jacket according to the preceding claim, **characterized in that** said upper layer (4) and said lower layer (3) have a thickness of about 50 µm.

6. An evacuated jacket according to any of the preceding claims, **characterized in that** it contains a getter material or device.

7. A process for manufacturing an evacuated jacket according to one of the preceding claims, **characterized in that** it comprises the following steps:
- preparing one multi-layer barrier sheet having a substantially rectangular shape comprising at least one polymeric or inorganic central layer (2) having barrier properties towards atmospheric gases, an upper layer (4) and a lower layer (3) formed of mutually heat-sealable polymeric materials;
- folding up said barrier layer (1) so as to superimpose two opposite margins thereof (5, 6) and welding together said margins by melting said upper layer (4) at one margin (6) and said lower layer (3) at the other margin (5), obtaining an envelope with two open ends;
- sealing one open end of said envelope by welding on itself an edge of the barrier sheet which is orthogonal to said margins (5, 6);
- inserting into the envelope a discontinuous or porous, inorganic or organic filling material;
- evacuating the interior of the envelope; and
- sealing the other open end of the envelope by welding on itself the other edge of the barrier sheet which is orthogonal to said margins (5, 6).

8. A process according to claim 7 **characterized in that**, before the last sealing, a getter material is inserted inside the envelope.

## Patentansprüche

1. Evakuierter Mantel zur Wärmeisolation mit einem diskontinuierlichen oder porösen, organischen oder anorganischen Füllmaterial innerhalb eines Umschlags gebildet mit zumindest einem im Wesentlichen rechteckigen Mehrschichtsperrbogen (1) mit wenigstens einer polymeren oder anorganischen Zentralschicht (2) mit Sperrfunktion gegenüber atmosphärischen Gasen, einer oberen Schicht (4) und einer unteren Schicht (3), **dadurch gekennzeichnet, dass** die obere Schicht (4) und die untere Schicht (3) der Sperrschicht (1) aus gegenseitig wärmedichtbaren polymeren Materialien gebildet sind.

2. Evakuierter Mantel nach dem vorhergehenden Anspruch, **dadurch gekennzeichnet, dass** jeweils das polymere Material, welches die obere Schicht (4) und das polymere Material, welches die untere Schicht (3) der Sperrschicht (1) bildet, ausgewählt sind aus der Gruppe aus:
Polyolefin, Polyacrylonitril, Polyvinylchlorid und Mischungen oder Copolymeren davon.

3. Evakuierter Mantel nach dem vorhergehenden Anspruch, **dadurch gekennzeichnet, dass** jeweils die obere Schicht (4) und die untere Schicht (3) der Sperrschicht aus hochdichtem Polyethylen oder einem Copolymer davon gebildet sind.

4. Evakuierter Mantel nach einem der vorhergehenden Ansprüche, **dadurch gekennzeichnet, dass** die obere Schicht (4) und die untere Schicht (3) der Sperrschicht (1) eine Dicke zwischen 20 und 100 µm haben.

5. Evakuierter Mantel nach dem vorhergehenden Anspruch, **dadurch gekennzeichnet, dass** die obere Schicht (4) und die untere Schicht (3) eine.Dicke von ungefähr 50 µm haben.

6. Evakuierter Mantel nach einem der vorhergehenden Ansprüche, **dadurch gekennzeichnet, dass** er ein Gettermaterial oder -bauteil umfasst.

7. Verfahren zur Herstellung eines evakuierten Mantels nach einem der vorhergehenden Ansprüche, **dadurch gekennzeichnet, dass** es die folgenden Schritte umfasst:
- Vorbereiten eines Mehrschichtsperrbogens mit einem im Wesentlichen rechteckigen Querschnitt mit zumindest einer polymeren oder anorganischen Zentralschicht (2) mit Sperrfunktion gegenüber atmosphärischen Gasen, einer oberen Schicht (4) und einer unteren Schicht (3) gebildet aus gegenseitig wärmedichtbaren polymeren Materialien;
- Falten der Sperrschicht (1), so dass zwei gegenüberliegende Ränder (5,6) davon sich einander überlagern und Zusammenschweißen der Ränder durch Schmelzen der oberen Schicht (4) an einem Rand (6) und der unteren Schicht (3) am anderen Rand (5), wodurch ein Umschlag mit zwei offenen Enden erhalten wird;
- Versiegeln eines offenen Endes des Umschlags durch Verschweißen einer Kante der Sperrschicht, welche orthogonal zu den Rändern (5,6) ist mit sich selbst;
- Einführen eines diskontinuierlichen oder porösen, anorganischen oder organischen Füllmaterials in den Umschlag;
- Evakuieren des Inneren des Umschlags; und
- Versiegeln des anderen offenen Endes des Umschlags durch Verschweißen der anderen Kante der Sperrschicht, die orthogonal zu den Rändern (5,6) ist mit sich selbst.

8. Verfahren nach Anspruch 7, **dadurch gekennzeichnet, dass** vor dem letzten Siegelvorgang ein Gettermaterial in den Umschlag eingeführt wird.

## Revendications

1. Enveloppe sous vide d'isolation thermique, comprenant un matériau de remplissage minéral ou organique, discontinu ou poreux, disposé à l'intérieur d'une enveloppe réalisée avec au moins une feuille barrière multicouche (1) à forme sensiblement rectangulaire, qui comprend au moins une couche centrale minérale ou polymère (2) présentant des propriétés barrière aux gaz atmosphériques, une couche supérieure (4) et une couche inférieure (3), **caractérisée en ce que** ladite couche supérieure (4) et ladite couche inférieure (3) de la feuille barrière (1) sont formées en matériaux polymères thermocollables entre-eux.

2. Enveloppe sous vide selon la revendication précédente, **caractérisée en ce qu'**à la fois le matériau polymère qui forme ladite couche supérieure (4) et le matériau polymère qui forme ladite couche inférieure (3) de la feuille barrière (1) sont choisis dans le groupe consistant en polyoléfines, polyacrylonitriles, polychlorures de vinyle et leurs mélangés ou copolymères.

3. Enveloppe sous vide selon la revendication précédente, **caractérisée en ce qu'**à la fois la couche supérieure (4) et la couche inférieure (3) de la feuille barrière sont réalisées en polyéthylène haute densité ou un de ses copolymères.

4. Enveloppe sous vide selon l'une quelconque des revendications précédentes, **caractérisée en ce que** ladite couche supérieure (4) et ladite couche inférieure (3) de la feuille barrière (1) présentent une épaisseur entre 20 et 100 µm.

5. Enveloppe sous vide selon la revendication précédente, **caractérisée en ce que** ladite couche supérieure (4) et ladite couche inférieure (3) présentent une épaisseur d'environ 50 µm.

6. Enveloppe sous vide selon l'une quelconque des revendications précédentes, **caractérisée en ce qu'**elle comprend un dispositif ou un matériau piégeur.

7. Procédé pour fabriquer une enveloppe sous vide selon l'une quelconque des revendications précédentes, **caractérisée en ce qu'**il comprend les étapes suivantes:
- préparer une seule feuille barrière multicouche présentant une forme sensiblement rectangulaire comprenant au moins une couche centrale minérale ou polymère (2) présentant des propriétés barrière aux gaz atmosphériques, une couche supérieure (4) et une couche inférieure (3) formées en matériaux polymères thermocollables entre-eux ;
- replier ladite couche barrière (1) de façon à superposer leurs deux marges opposées (5, 6) et souder ensemble lesdites marges en faisant fondre ladite couche supérieure (4) au niveau de l'une des marges (6) et ladite marge inférieure (3) au niveau de l'autre marge (5), de façon à obtenir une enveloppe avec deux extrémités ouvertes ;
- coller l'une des extrémités ouvertes de ladite enveloppe en soudant sur elle-même un bord de la feuille barrière qui est perpendiculaire audites marges (5, 6) ;
- insérer dans l'enveloppe un matériau de remplissage organique ou minéral, discontinu ou poreux ;
- faire le vide à l'intérieur de l'enveloppe ; et
- coller l'autre extrémité ouverte de l'enveloppe en soudant sur elle-même l'autre bord de la feuille barrière qui est perpendiculaire audites marges (5, 6).

8. Procédé selon la revendication 7, **caractérisé en ce qu'**un matériau piège est inséré à l'intérieur de l'enveloppe avant le dernier collage.
